# EUROPEAN PATENT APPLICATION

(11) **EP 3 872 673 A1**
(43) Date of publication of application: **01.09.2021**
(21) Application number: 20160289.3
(22) Date of filing: 29.02.2020
(51) Int. Cl.: G06F 30/13, G06F 30/10, G06F 111/16, G06F 111/04, G06F 119/20

(54) **AUTOMATION OF USER-BASED MODEL CREATION**

(71) Applicant: Rapp-Katzer, Martin, 78664 Eschbronn (DE)
(72) Inventor: Katzer, Stefanie, 78664 Eschbronn (DE)
(74) Representative: Meyer zu Bexten, Elmar

(57) **Abstract**

Planning and design for private and public clients is typically time-consuming and prone to error.

**Solution**

Computer-implemented method of modeling a physical environment such as a garden of a user,
comprising
determining current (Ap2.1) and desired (Ap2.2) features of the environment, characterized in
automatically creating models (Ap3.1) of the environment exhibiting the determined features.

## Description

### Technical Field

The invention relates to the process and products as per the first portion of the independent claims.

### Background Art

Hereinafter, by "landscape" is meant the entirety of visible features of a person's physical environment, its landforms, and how they integrate with natural or man-made features. In this context, landscape engineering is the interdisciplinary application of engineering and other applied sciences to the design and creation of landscapes. State-of-the-art technology for conveying landscape and garden design comprises virtual modeling, geographic information systems (GIS), or simulations using layers of photography. Examples of pertinent techniques may be gathered from NPL1.

In this context, the term "modeling" is used in its broadest sense. For instance, a photo of a house may be considered a model, as may be an interactive, virtual 3D setting. Thus, a desired model can be created as a photo with little data or, given richly detailed data, as a computer simulation. By way of example, PTL1 discloses a manual method of modeling a garden based on its outline and desired plantation.

### Summary of invention

A software application creates models of a user's environment in accordance with specifications of his or her current and desired environment. At the core of the application lies the automatic creation of the models.

### Technical Problem

Planning and design for private and public clients is typically time-consuming and prone to error.

### Solution to Problem

A client undergoes a process whereby his preferences and requirements regarding an open space (such as his garden or home) are determined and recorded in the form of data packages. The result is a set of facts and figures that, as the process progresses, may be summarized in an individual profile. The client thus is enabled to record his needs within a short time of approximately 60-120 minutes and render them tangible to the architect.

The proposed processes and workflows are designed in such a way that a self-learning system, if based on suitable algorithms, can process the manually entered data whilst it is being edited. Between successive updates, the system can discard those items that have been discarded in the preceding data collection process. The algorithm can be extended to ensure that, whilst the client is editing, his selections on subsequent editing pages may be predicted with a high degree of certainty. This guarantees that every data point is considered.

On completion of the processing, the architect has access to a complete data set, such as a spreadsheet, for evaluation. Based on this data set, i. e. customer profile, the architect may commence his planning. By artificial intelligence (Al) support, designs and underlying data (all information obtained from the dataset and configuration files) can be imported as a baseline design - through interfaces to standard CAD programs - and processed accordingly.

### Advantageous effect of invention

Planning quality is greatly improved, and planning time is shortened considerably.

### Brief description of drawings

Figure 1 shows the application as per the invention.
Figure 2 shows the determination of current features.
Figure 3 shows the determination of desired features.
Figure 4 shows the creation of models.

### Description of embodiments

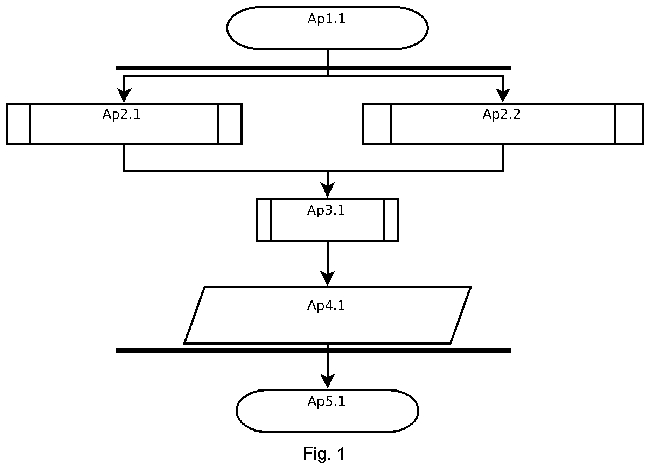

Figure 1 gives a general overview of the application, which may be used by either a client or an employee. Therefore, the generic term "user" is applied in this context, and a user profile is allocated to that user.

Initially, the current and desired features are determined, which are required to create the models. Finally, the models are made available to the user. Due to the functional independence between the application components, concurrent processing is possible. (The two thick parallel lines in Fig.1 indicate this fact.) That property also applies within the sub-processes Ap2.1, Ap2.2 and Ap3.1.

This overall process will now be elucidated in further detail, commencing with the initial state Ap1.1 of the application. Hereinafter, the term "feature" is meant to encompass conditions to be observed, those being observed, and those being ignored. For example, compliance with the condition "pool is desired" is regarded a feature, as is the condition "no pool included in the model". Also, given features could change during the application process. As an example, the user may want the feature "pool is desired" to be ultimately fulfilled, but the application might determine that no pool is possible due to local specifications and therefore remove it from the model.

Sub-process Ap2.1 serves to determine the current features describing the present environment of the user. That is, they describe the topology, size, objects, and so on, of his or her property. This determination uses different data sources to determine the situation as accurately as possible.

Since the user would like to modify his or her current situation, sub-process Ap2.2 determines which features are desired to achieve such modification. For this purpose, pre-selected features and design templates may be chosen from.

When enough features are available, a model of the current or desired environment can be created in sub-process Ap3.1. The created models can then be output (Ap4.1) for further use before the application terminates (Ap5.1).

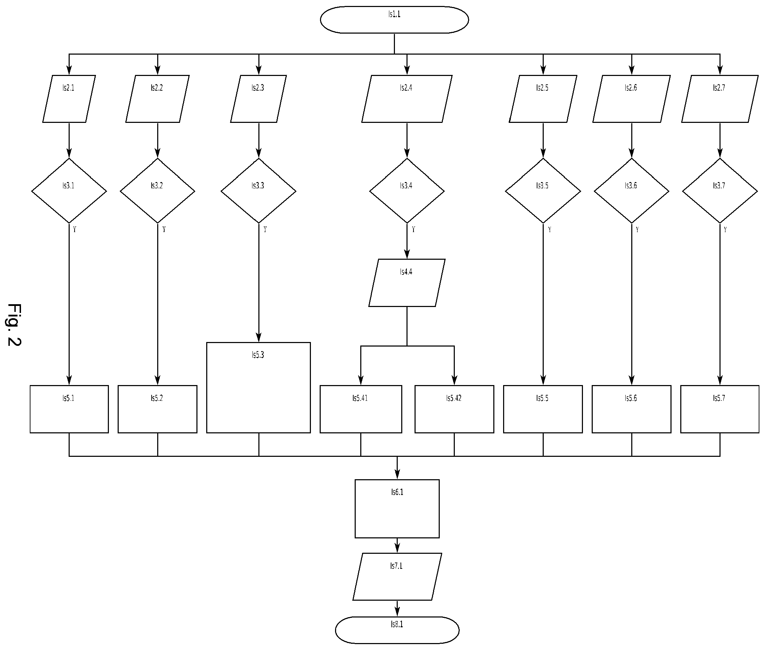

Figure 2 illustrates how and from which data sources the required current features are determined, commencing with the initial state Is1.1 of sub-process Ap2.1. Herein, Is2.1 through Is2.7 share the common goal of obtaining information about the current situation. To this end, the features of the current situation are extracted from data provided by the user. Specifically, Is2.7 queries the user about the changeability of the current features. For example, the user may indicate that a lawn is eligible for plantation, whereas the existing garden is to remain untouched.

Condition blocks Is3.1 through Is3.7 indicate that any data source is considered optional. If a condition is violated, the corresponding path is skipped.

In Is4.4, location details are exploited to include related information as an additional data source.

In Is5.1 through Is5.7, the current features are extracted from the available data sources. "Extraction" in this context is understood to encompass straightforward copying as well as algorithmically more complex procedures. In addition, features which are not directly contained in the source material or not included therein at all can be determined during extraction.

Is5.3 represents an example of a more complex procedure for extracting current features. Since features such as "facade consists of wood" cannot be acquired directly from a photographic image, image processing methods may be used to determine the features. For this purpose, a pertinent photograph may be segmented into rough shapes such as large rectangles whose properties, for example, colors, may be determined computationally. Such properties may then be used for classification, such as by material or vegetation, or regression of the feature. For instance, step Is5.3 may defer that an extensive green rectangle depicts a grassy area, the user's property thus comprising a lawn.

Step Is5.41 procures information on the regulations or conventions applicable at the location. For example, it may be ascertained that a desired barbecue site would have to be located at a distance of at least 10 meters from an inhabited building for reasons of fire safety. Location may further serve as a data source for obtaining a more accurate model. For instance, in Is5.42, an address of the property in questions could be used to establish that a nearby hill would significantly reduce the number of hours of direct sunshine on that property's south side.

In Is6.1, the features extracted from given data sources are merged into a collection of current features. This collection is determined by the subsequent process steps, since the collection employed will depend on the implemented procedure. Each data source provides a set of current features derived therefrom.

Herein, a source does not have to determine all current features for the collection required. Features may also be redundant or determined only by combination of the attributes derived at this point. As a result, the required collection is created from all acquired properties. In case of redundancies, a decision is made; in case of missing properties, these are supplemented; and then derivable features are determined to finally create the collection.

Since the current features form the basis for relationship with the user, they should be linked to the user's profile (Is7.1) before the sub-process terminates (Is8.1).

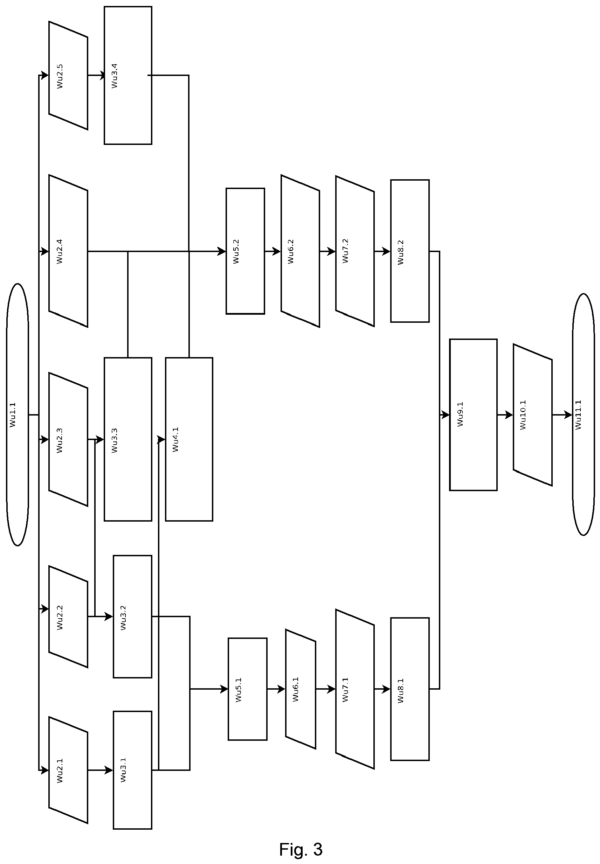

Figure 3 outlines how the desired features are determined based on specifications supplied by a user, commencing with the initial state Wu1.1 of sub-process Ap2.2. To derive the available options, data sources are loaded into the application (steps Wu2.1 through 2.5).

From the user profile, information for the selection of desired features may be obtained in advance (Wu3.1). For example, a user could be mapped to a class of users based on his or her profile. (Such classification could be obtained from the entirety of internal or external user profiles.) Additional user preferences may then be derived from the assigned class and added to the given profile.

For example, by analyzing the existing profiles and information from social media, the classes "friend of modern design" and "friend of farm gardens" could be attained. The user might then be assigned to the class "friend of farm gardens". From that analysis, it may be deduced that he or she has little interest in palm trees. This preference could later result in the design template "Mediterranean inner courtyard" being accorded a lower priority than the alternative "Tyrolean alpine pasture".

For the purpose of Wu3.2, a given design template is linked to vendor notes. Thus, that template could associate the information "black decorative granite is included" with a manufacturer of such granite to inform the user about sources of supply. For this step, both the vendor notes and the design templates are required.

Wu3.3 provides configuration options based on these vendor notes. The configuration is thus tied to the selection of possible vendors of a feature. Thus, a local construction equipment supplier could be listed as an option in the configuration.

In Wu3.4, configuration options are derived from current features specified by the user. Based on, for instance, the feature "barbecue should be located at a distance of at least 10 meters from inhabited buildings", the option of a barbecue could be disabled for a specific environment where it would be impossible to fulfill that condition.

Configuration options are derived from the user preferences in step Wu4.1. Since any configuration offers a wide range of options, preselection can facilitate the configuration process on the part of the user. By way of example, a preference such as "friend of farm gardens" could lead the application to preselect "geraniums as planting" during configuration.

The application then picks a collection from the given design templates and user preferences (Wu5.1). For example, all available design templates could be considered as well as a preselection of farm gardens for users of the class "friend of farm gardens". Similarly, Wu5.2 offers a preselection of configuration options based on preferences, vendor notes, current features, and general capabilities. A default configuration may also be created.

The preselected options in terms of design templates and options are presented to the user (Wu6.1, Wu6.2), querying for a decision (Wu7.1, Wu7.2), upon which his choices (Wu8.1, Wu8.2) are taken as input. Finally, the desired features are merged (Wu9.1) as has been previously described with respect to the current features (cf. Is6.1).

Since the desired features form the basis for relationship with the user, they too should be linked to the user's profile (Wu10.1) before the sub-process terminates (Wu11.1).

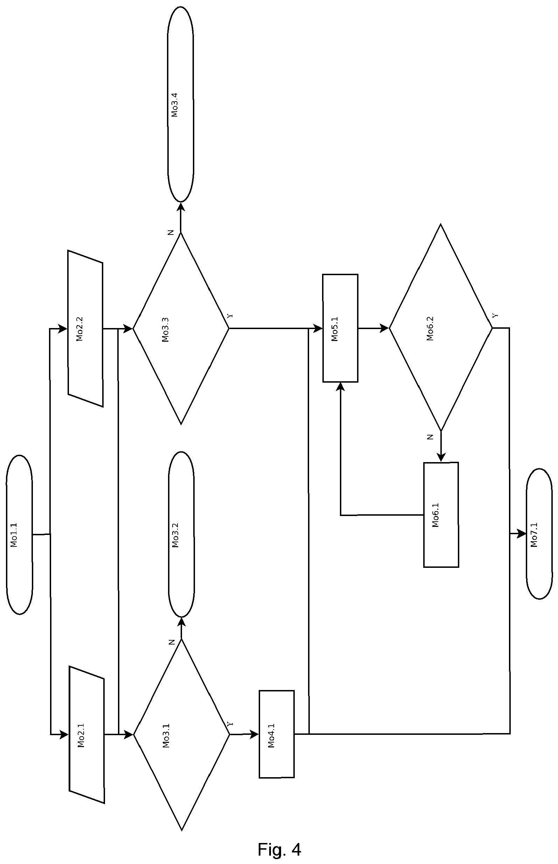

Finally, Figure 4 visualizes how the current and desired features are transformed into the target models, commencing with the initial state Mo1.1 of sub-process Ap3.1. Specifically, a current model, a desired model, or both can be created.

To this end, the current and desired features are first acquired (Mo2.1, Mo2.2). Mo3.1 then tests whether the given current features suffice for the creation of the current model. This decision determines which features must be present in the required collection. If the features are insufficient, no current model will be created (Mo3.2).

A similar test is performed for the desired features (Mo3.3, Mo3.4). Only if the respective test succeeds will the current model (Mo4.1) and desired model (5.1) be created. The loop formed by Mo5.1, Mo6.1, Mo6.2 reflects the cycle whereby, after the desired model has been created (Mo5.1), it is modified (Mo6.1) until the greatest possible number of features is achieved (Mo6.2) and the sub-process terminates (Mo7.1).

### Industrial applicability

The invention is applicable, among others, throughout the landscaping and gardening industries.

### Reference signs list

- Ap1.1: Start of application
- Ap2.1: Determine current features
- Ap2.2: Determine desired features
- Ap3.1: Create models
- Ap4.1: Provide models
- Ap5.1: End of application
- Is1.1: Current features are to be determined
- Is2.1: Query about site map
- Is2.2: Query about architectural plan
- Is2.3: Query about imagery
- Is2.4: Query about location
- Is2.5: Query about aerial photography
- Is2.6: Query about pre-existing model
- Is2.7: Query about supporting detail
- Is3.1-Is3.7: Provided?
- Is4.4: Procure locational information
- Is5.1: Extract feature from site map
- Is5.2: Extract feature from architectural plan
- Is5.3: Extract feature from imagery
- Is5.41: Extract feature from local regulations
- Is5.42: Extract feature from surroundings
- Is5.5: Extract feature from aerial photography
- Is5.6: Extract feature from pre-existing model
- Is5.7: Extract feature from supporting detail
- Is6.1: Determine current features by merging extracted features
- Is7.1: Supplement user profile with current features
- Is8.1: Current features have been determined
- Wu1.1: Desired features are to be determined
- Wu2.1: Load user profile
- Wu2.2: Load design templates
- Wu2.3: Load vendor notes
- Wu2.4: Load configuration options
- Wu2.5: Load current features
- Wu3.1: Extract and supplement with user preferences
- Wu3.2: Supplement templates based on vendor notes
- Wu3.3: Derive configuration options from vendor notes
- Wu3.4: Derive configuration options from current features
- Wu4.1: Derive configuration options from user preferences
- Wu5.1: Preselect design templates
- Wu5.2: Preselect configuration options
- Wu6.1: Present design templates
- Wu6.2: Present configuration options
- Wu7.1: Query for choice among design templates
- Wu7.2: Query for choice among configuration options
- Wu8.1: Extract features from design template
- Wu8.2: Extract features from configured options
- Wu9.1: Determine desired features by merging extracted features
- Wu10.1: Supplement user profile with desired features
- Wu11.1: Desired features have been determined
- Mo1.1: Models are to be created
- Mo2.1: Acquire current features
- Mo2.2: Acquire desired features
- Mo3.1: Do features suffice for creation?
- Mo3.2: Current model is not created
- Mo3.3: Do features suffice for creation?
- Mo3.4: Desired model is not created
- Mo4.1: Create current model
- Mo5.1: Create desired model
- Mo6.1: Modify features
- Mo6.2: Is greatest possible number of features achieved?
- Mo7.1: Models have been created

### Citation list

The following documents are cited hereinbefore.

### Patent literature

PTL1: **AT 243539 B** (BAUMSCHULEN A. STOCKL) 11.10.1965

### Non-patent literature

NPL1: AL-KODMANY, Kheir. Visualization tools and methods for participatory planning and design. Journal of Urban Technology. 2001, vol.8, no.2, p.1-37.

## Claims

1. Computer-implemented method of modeling a physical environment such as a garden of a user,
comprising
determining current (Ap2.1) and desired (Ap2.2) features of the environment, **characterized in**
automatically creating models (Ap3.1) of the environment exhibiting the determined features.

2. Method as per Claim 1
comprising, to determine the current features (Ap2.1),
querying the user about an available data source (Is2.1-Is2.7),
if the data is provided (Is3.1-Is3.7), extracting a feature from the data (Is5.1-Is5.7),
determining the current features by merging the extracted features (Is6.1) and, preferably, supplementing a profile of the user with the current features (Is7.1).

3. Method as per Claim 2
wherein
the data source is a site map, architectural plan, aerial photography such as by an unmanned aerial vehicle, pre-existing model, or supporting detail such as zoning restrictions.

4. Method as per Claim 2
wherein
the data source comprises photographic images of the environment and
the feature is extracted by segmenting the images into rough shapes such as large rectangles, determining properties of the shapes such as colors, and using the properties for classification, such as by material or vegetation, or regression of the feature (Is5.3).

5. Method as per Claim 2
wherein
the data source comprises a location of the environment and,
upon procuring information (Is4.4) on the applicable regulations or surroundings of the location, the feature is extracted from the information (Is5.41, Is5.42).

6. Method as per any of Claim 2 through Claim 5
comprising, to determine the desired features (Ap2.2),
loading the profile (Wu2.1), design templates (Wu2.2), and vendor notes (Wu2.3),
deriving from the profile a class of the user and supplementing the profile with preferences (Wu3.1) depending on the class,
supplementing the templates based on the vendor notes (Wu3.2), preselecting (Wu5.1) and presenting (Wu6.1) the templates, and querying the user for a choice among the templates (Wu7.1).

7. Method as per Claim 6
further comprising, to determine the desired features (Ap2.2),
loading the current features (Wu2.5) and configuration options (Wu2.4), deriving further options from the vendor notes (Wu3.3), current features (Wu3.4), and preferences (Wu4.1),
preselecting (Wu5.2) and presenting (Wu6.2) the options, and
querying the user for a choice among the options (Wu7.2).

8. Method as per Claim 7
comprising
extracting features from the choices (Wu8.1, Wu8.2),
determining the desired features by merging the extracted features (Wu9.1) and,
preferably, supplementing the profile with the desired features (Wu10.1).

9. Method as per any of the preceding claims
comprising, upon acquiring the current (Mo2.1) and desired (Mo2.2) features, testing whether the current features suffice (Mo3.1) and, if applicable, creating a model of the current environment (Mo4.1).

10. Method as per Claim 9
further comprising, upon acquiring the current (Mo2.1) and desired (Mo2.2) features,
testing whether the desired features suffice (Mo3.3) and,
if applicable, creating a model of the desired environment (Mo5.1) based on the model of the current environment.

11. Method as per Claim 10
comprising, upon creating the models (Mo4.1, Mo5.1),
testing whether the model of the desired environment exhibits a maximum number of the features (Mo6.2) and,
if not applicable, modifying the model (Mo6.1).

12. Method as per any of the preceding claims
comprising, upon creating the models (Ap3.1),
providing the models to the user (Ap4.1).

13. Data processing apparatus comprising means for carrying out the method of any of the preceding claims.

14. Computer program comprising instructions which, when the program is executed by a computer, cause the computer to carry out the method of any of Claim 1 through Claim 12.

15. Data carrier signal carrying the program of Claim 14.
